## Europäisches Patentamt

## European Patent Office

## Office européen des brevets

(19)

(11) Publication number: **0 048 627**

**A1**

(12)

# EUROPEAN PATENT APPLICATION

(21) Application number: **81304367.6**

(22) Date of filing: **23.09.81**

(51) Int. Cl.³: **C 08 F 10/08**
**C 08 F 10/10, C 08 F 10/14**
**C 08 F 4/64, C 08 F 4/58**
**C 08 F 240/00**

(30) Priority: **24.09.80 GB 8030761**

(43) Date of publication of application:
**31.03.82 Bulletin 82/13**

(84) Designated Contracting States:
**BE DE FR GB IT LU NL**

(71) Applicant: **BP Chemicals Limited**
**Belgrave House 76 Buckingham Palace Road**
**London, SW1W 0SU(GB)**

(72) Inventor: **Marsh, Christopher Reginald**
**30 Elizabeth Avenue**
**Grangemouth Sterlingshire(GB)**

(74) Representative: **Harry, John et al,**
**BP INTERNATIONAL LIMITED Patents and Licensing**
**Division Chertsey Road**
**Sunbury-on-Thames Middlesex TW16 7LN(GB)**

(54) Catalyst system for cationic (co)polymerisation of 1-olefins.

(57) This invention relates to a process for producing homo-
or copolymers of 1-olefins by contacting a feedstock comprising a 1-olefin containing at least 4 carbon atoms with a
cationic polymerisation catalyst system in the homogeneous
phase, the said catalyst system comprising:
(a) an organo-aluminium compound,
(b) a methallyl halide, and
(c) a metal halide of tin or titanium.
The most preferred 1-olefin is isobutene or feedstock
containing isobutene.

EP 0 048 627 A1

1

## Catalyst system for cationic (CO) polymerisation of l-olefins

The present invention relates to a process for producing homo- and copolymers of l-olefins by cationic polymerisation of the monomer(s) in the presence of a novel catalyst system.

It is known to produce homopolymers and copolymers of l-olefins using cationic polymerisation catalysts. A typical example is a Friedel-Crafts catalyst such as aluminium trichloride dissolved in a polar solvent such as an alkyl halide. Polar solvents are used because aluminium halides in general and aluminium trichloride in particular are virtually insoluble in hydrocarbon solvents. This low solubility has given rise to many difficulties in the control of the polymerisation reaction. For example, it is difficult to prepare the catalyst, to determine precisely the amount of catalyst to be used and yet more difficult to calculate the required rate of introduction of the catalyst into the polymerisation reactor. In addition, relatively pure monomer feedstocks may have to be used to produce the desired polymer, especially for producing high molecular weight polyisobutenes on a commercial scale.

It has now been found that the above problems associated with cationic polymerisation processes may be mitigated by using a novel catalyst system which is not only capable of reducing the duration of the induction period but which also exhibits higher initiator activity.

Accordingly, the present invention is a process for producing homo- and/or copolymers of l-olefins by contacting a feedstock comprising a l-olefin containing at least 4 carbon atoms with a cationic polymerisation catalyst system in the homogeneous phase, the said catalyst system comprising:

(a)   an organo-aluminium compound of the general formula $R_nAlX_{3-n}$ wherein R represents the same or different alkyl radicals having between 1 and 6 carbon atoms, X represents a chlorine or bromine atom and n is an integer not greater than 3,

(b)   methallyl chloride or bromide, and

(c)   a metal halide selected from tin tetrachloride, tin tetrabromide, titanium tetrachloride and titanium tetrabromide.

The 1-olefins present in the feedstock used in the cationic (co)polymerisation process of the present invention preferably contain 4 to 10 carbon atoms.   Examples of such 1-olefins include butene-1, isobutene, 4-methylpentene-1, octene-1, decene-1, styrene and alpha-methylstyrene.   These 1-olefins may be homopolymerised or copolymerised with each other or with minor amounts of other monomers which may be incorporated cationically including, amongst others, methallyl halide (which is a catalyst component) and non-conjugated dienes such as e.g. vinyl norbornene, d-limonene and 2-methyl-1,5-hexadiene.   The most preferred 1-olefin is isobutene or feedstock containing isobutene.   The feedstock containing isobutene may be the products of a thermal or catalytic cracking operation from which acetylenic compounds and butadiene must be removed prior to polymerisation.   The feedstock may contain between 10 and 100% by weight of isobutene.   It is preferable to use a feedstock containing at least 50% by weight of isobutene.   However conventional feedstock containing between 15 and 50% by weight of isobutene may be used to obtain the desired product.   Hydrocarbon feedstocks containing in addition to isobutene between 10 and 40% by weight of butanes and/or between 10 and 40% by weight of normal butenes may be used without adverse effects on the polymer product.   If during polymerisation of isobutene, methallyl halide is present in gross quantities, the latter may act as a comonomer and isobutene polymers containing halogen atoms may be produced.   This is because of the presence of the isobutenyl function in both isobutene and methallyl halide.   The presence of a halogen substituent in the polymer product is particularly useful because it facilitates introduction of groups such as the amino group into the molecule and also enhances its reactivity towards compounds such as maleic anhydride to produce polyisobutenyl succinic anhydride (PIBSA) type derivatives.

The organo aluminium compound in the catalyst system has the general formula $R_nAlX_{3-n}$ where R is a $C_1$ to $C_6$ alkyl radical, n is 1, 2 or 3, and X is a chlorine or bromine atom. Where the organo-aluminium compound has more than one alkyl group, these alkyl groups may be the same or different. Ethyl aluminium dihalides and particularly ethyl aluminium dichloride, are preferred.

The relative concentrations of the three components in the catalyst system of the present invention may vary over a moderately wide range depending upon the nature of the organo aluminium compound used. In the catalyst system, the molar ratio of the organo aluminium compound to the metal halide is suitably between 1:10 and 10:1, preferably between 1:4 and 4:1. If an alkyl aluminium dihalide is used the three components are preferably used in substantially equimolar amounts. The catalyst concentration for the reaction would depend upon the feed composition, the product desired, the temperature and the residence time. As a general guide, the catalyst concentration, assuming substantially equimolar proportions are used but based on the organo aluminium compound content thereof, is suitably between 20 and 200 ppm, preferably between 80 and 120 ppm by weight of the 1-olefin monomer in the feedstock. Methallyl halide is suitably present in a molar ratio of at least 1:10 with respect to the organlaluminium compound and may be used in excess without drastically lowering the molecular weight of the polymer, although as mentioned previously, this may result in a polymer product which has halogen atom substituents therein. Where methallyl halide is used as a comonomer (in addition to its function as a catalyst component) it may be present to a level of up to 30% by weight, preferably 15% w/w with respect to the 1-olefin.

The novel catalyst system may contain, in addition, minor proportions of other conventional components such as e.g. tertiary-butyl halides or hydrogen chloride.

The components of the catalyst system are introduced into the polymerisation reactor as solutions thereof in a solvent which may be

polar or non-polar. Examples of solvents include primary and secondary alkyl halides, and aliphatic and alicyclic hydrocarbon solvents. Specific examples of polar solvents include dichloromethane, methyl chloride, ethyl chloride and dichloroethane. Examples of non-polar solvents include n-hexane, n-heptane, isooctane, cyclohexane and cyclododecane. Where a feedstock such as butadiene raffinate is used as the source of the 1-olefin reactant, the catalyst components may be introduced neat into the reactant because the other compounds present in the raffinate will act as solvent for the catalyst components. It is essential to produce separate solutions of the alkyl aluminium halide on the one hand and a mixture of the metal halide/and methallyl halide on the other hand. For both solutions, the hydrocarbon solvent is suitably n-hexane or n-heptane. The two component solutions should be fed simultaneously into the polymerisation reactor.

The polymerisation reaction is suitably carried out at a temperature between -100 and +100°C. For polymerisation of isobutene it is preferably -30 and +35°C, and most preferably between -5°C and -25°C, whereas for polymerisation of relatively sluggish monomers such as e.g. octene-1 and decene-1, it is preferably +25° to +100°C.

The invention is further illustrated with reference to the following Examples which have been compared with a Control Experiment (not according to the invention).

Example 1

Butadiene raffinate (BDR) of the following composition:

Feedstock Composition (% w/w)

| Isobutane | = | 12.38 | Trans Butene-2 | = | 8.45 |
|-----------|---|-------|----------------|---|------|
| n-Butane | = | 17.95 | Cis Butene-2 | = | 3.67 |
| Butene-1 | = | 19.25 | | | |
| Isobutene | = | 38.33 | | | |

was charged to a 1 litre round-bottomed, flanged-top flask fitted with a paddle stirrer, solid $CO_2$ condenser, nitrogen inlet, thermocouple, gas sampling port and two independent catalyst component feed lines. The concentration (w/v) of the various catalyst components in the n-heptane solutions used was as follows:

4

Ethyl aluminium dichloride (AlEtCl$_2$)  =  1.08 %

Titanium tetrachloride (TiCl$_4$)  =  1.618%

Tertiary butyl chloride (Bu$^t$Cl)  =  0.394%

Methallyl chloride (MAC)  =  0.394%

The molar ratio of AlEtCl$_2$:TiCl$_4$:Bu$^t$Cl and/or MAC in the initiator solution used was 1:1:0.5 respectively.

In this Example, methallyl chloride (MAC) was added to the feedstock before simultaneously metering the two separate catalyst component solutions namely ethyl aluminium dichloride in n-heptane and a mixture of titanium tetrachloride and tetiary-butyl chloride in n-heptane through the two feed lines into the flask by means of peristaltic pumps, both solutions feeding at 25 ml/h.

Within minutes, rapid polymerisation of isobutene occurred and metering of catalyst components was stopped as the temperature of the reactants rose. Supplementary cooling was applied as necessary by partial immersion of the flask in a carbondioxide/acetone bath. As the reaction died away further aliquots of the catalyst component solutions were added to bring the conversion of isobutene to the desired level before the reaction terminated by addition of 10 ml of isopropyl alcohol. The final composition was determined by. G.C. analysis of the reactor vapour.

The charge was diluted with n-heptane and the unreacted C$_4$'s allowed to evaporate slowly overnight. The residue was washed with aqueous ammonia and water. Solvent and other light ends were removed by rotary evaporation at 200°C/5 mm Hg.

The viscous residue was then weighed and the polymer characterised by determination of the viscosity using a Ubbelohde Viscometer and by chlorine analysis.

The results are shown in the Table below.

Example 2

The process used in this Example was identical to that used in Example 1 above except for minor variations in the concentration of (i) the feed used and (ii) the components used, and the reaction temperature. The reaction conditions used and the results achieved are shown in the Table below.

Example 3

This Example was carried out under the same conditions as in Example 1 above except that methallyl chloride (MAC) was not added to the feedstock but used in place of tertiary-butyl chloride in an equivalent amount. Other minor variations in reaction conditions and the results obtained are shown in the Table below.

Control Experiment (C). (not according to the invention).

The above procedure of Example 1 -3 was repeated in a Control Experiment except that tertiary butyl chloride was used in place of the methallyl chloride in the catalyst solution and no methallyl chloride was added to the feedstock.

The results of the Examples and the Control Experiment are shown in the Table below.

TABLE

| Ex No. | BDR feed (g) | IB in feed (mol) | Catalyst components used in n-hexane solution | | | Temp. Range (°C) | Polymer Yield (g) | Polymer Grade Viscosity (SSU $\times 10^{-2}$) at 210°F |
|---|---|---|---|---|---|---|---|---|
| | | | MAC (g) | $AlEtCl_2$ (ml) | $TiCl_4/Bu^tCl$ (ml) | | | |
| 1 | 479.2 | 3.28 | 1.17 | 3.2 | 3.2 | −15/−8 | 106.4 | 14 200 |
| 2 | 534.5 | 3.658 | 2.67 | 3.9 | 3.9 | −11/−5 | 136.2 | 4 350 |
| 3 | 460.8 | 3.154 | 0.0106 | 2.7 | 2.7* | −11/−7.5 | 104.4 | 33 300 |
| C | 517.4 | 3.54 | NONE | 8.9 | 8.3 | −12/−6 | N D | 26 540 |

IB — isobutene
ND — not determined

* $Bu^tCl$ in catalyst solution replaced by equivalent quantity of MAC.

The conversion of isobutene % in Examples 1, 2 and 3 were 57.9, 66.5 and 59.1 respectively. The conversion of isobutene % in the control experiment C as determined by gas chromatography was approximately 50.

By using methallyl halides as a catalyst component in the process of the present invention, several advantages are obtained over conventional systems. For example:

1) Polymerisation is initiated with shorter induction periods.

2) Lesser amounts of catalyst components are consumed in producing polymers of comparable molecular weight.

3) Methallyl halide is capable of serving as a comonomer if used in gross quantities because it has the same isobutenyl structure as the isobutene monomer. This enables halogenated polyolefins to be produced.

4) The halogenated polyolefins may be used to introduce other functional groups in the polymer, e.g. by reaction with an amine, thus enabling the production of polymers with the desired properties for a specific use.

Claims:-

1.  A process for producing a polymer selected from a homopolymer and a copolymer of 1-olefins by contacting at a temperature between -100°C and + 100°C a feedstock comprising a 1-olefin containing at least 4 carbon atoms with a cationic polymerisation catalyst system in the homogeneous phase, said catalyst system comprising

    (a)  an organo-aluminium compound of the general formula $R_nAlX_{3-n}$ wherein R represents the same or different alkyl radicals having between 1 and 6 carbon atoms, X represents a chlorine or bromine atom and n is an integer not greater than 3,

    (b)  methallyl chloride or methallyl bromide, and

    (c)  a metal halide selected from tin tetrachloride, tin tetrabromide, titanium tetrachloride and titanium tetrabromide.

2.  A process according to claim 1 wherein the feedstock contains between 4 and 10 carbon atoms.

3.  A process according to claim 2 wherein the feedstock contains one or more 1-olefins selected from butene-1, isobutene, 4-methylpentene-1, octene-1, decene-1, sytrene and alpha-methyl styrene.

4.  A process according to claim 1 wherein the 1-olefin is copolymerised with other monomers selected from a methallyl halide and a non-conjugated diene.

5.  A process according to claim 4 wherein the non-conjugated diene is selected from vinyl norbornene, d-limonene and 2-methyl-1,5-hexadiene.

6.  A process according to claim 1 wherein the feedstock contains between 10 and 100% by weight of isobutene.

7.  A process according to claim 6 wherein the feedstock contains between 15 and 50% by weight of isobutene, between 10 and 20% by weight of butanes and between 20 and 40% by weight of normal butenes.

9

8. A process according to claim 1 wherein the organo aluminium compound in the catalyst system is an ethyl aluminium dihalide.

9. A process according to claim 1 wherein the molar ratio of the organo aluminium compound to the metal halide is between 1:10 and 10:1.

10. A process according to claim 1 wherein the components of the catalyst system are introduced as separate homogeneous solutions but simultaneously into a reactor in which the feedstock is contacted with the catalyst system, the separate solutions being those of

    (a) the organo aluminium compound, and

    (b) the methallyl halide and the metal halide,

each being in an organic solvent.

0048627

European Patent
Office

EUROPEAN SEARCH REPORT

Application number

EP 81 30 4367

## DOCUMENTS CONSIDERED TO BE RELEVANT

| Category | Citation of document with indication, where appropriate, of relevant passages | Relevant to claim |
|---|---|---|
| X | GB - A - 953 958 (CALIFORNIA RE-SEARCH CO.)<br><br>* Claims 1-5; page 2, lines 21-45 and line 54 - page 3, line 19 *<br><br>-- | 1-5,8-10 |
| X | GB - A - 1 061 190 (HULS)<br><br>* Claims 1,3-6; page 1, lines 40-73; page 2, lines 27-35, 48-74, 85-99 *<br><br>---- | 1-5,8-10 |

**CLASSIFICATION OF THE APPLICATION (Int. Cl.³)**

C 08 F    10/08
10/10
10/14
4/64
4/58
240/00

**TECHNICAL FIELDS SEARCHED (Int. Cl.³)**

C 08 F    10/08
10/10
10/14
4/64
4/58
240/00

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&· member of the same patent family.

corresponding document

The present search report has been drawn up for all claims

| Place of search | Date of completion of the search | Examiner |
|---|---|---|
| The Hague | 18-12-1981 | WEBER |

EPO Form 1503.1  06.78